# EUROPÄISCHE PATENTSCHRIFT

(11) **EP 0 925 147 B1**
(45) Veröffentlichungstag und Bekanntmachung des Hinweises auf die Patenterteilung: **28.02.2001**
(21) Anmeldenummer: 97938909.5
(22) Anmeldetag: 14.08.1997
(51) Int. Cl.: B24B 9/14, B24B 55/04

(54) **BRILLENGLASRANDSCHLEIFMASCHINE**
POLISHING MACHINE FOR SPECTACLE LENSES
POLISSEUSE POUR BORDURE DE VERRE DE LUNETTES

(30) Priorität: 04.09.1996 DE 19635807
(43) Veröffentlichungstag der Anmeldung: 30.06.1999
(60) Teilanmeldung: 99117270.1
(73) Patentinhaber: Wernicke & Co. GmbH, 40231 Düsseldorf (DE)
(72) Erfinder: GOTTSCHALD, Lutz, D-40670 Meerbusch (DE)
(74) Vertreter: Rehders, Jochen
(86) Internationale Anmeldenummer: EP9704463
(87) Internationale Veröffentlichungsnummer: WO9809770

(56) Entgegenhaltungen:
- DE-A- 3 608 957
- DE-A- 4 309 101
- DE-C- 945 979
- FR-A- 2 553 323
- GB-A- 2 183 184
- US-A- 2 747 339
- US-A- 3 894 361

## Beschreibung

Die Erfindung betrifft eine Brillenglasrandschleifmaschine mit einer angetriebenen Schleifscheibe, einer relativ zur Schleifscheibe in zwei im wesentlichen zueinander senkrechten Achsen beweglichen, angetriebenen Brillenglashaltewelle und einer die Schleifscheibe und die Brillenglashaltewelle umschließenden Schleifkammer.

Brillenglasrandschleifmaschinen dieser Art sind z B. aus den Patentschriften DE-A-36 08 957 und DE-A-43 09 101 derselben Anmelderin bekannt.

Die in der deutschen Patentschrift 36 08 957 beschriebene Brillenglasrandschleifmaschine ist von der Art, bei der eine Schleifkammer auf einem Maschinenuntergestell befestigt ist, eine Brillenglashaltewelle mit ihrem Antrieb durch die Schleifkammer geführt ist, in der auch eine Schleifscheibe angeordnet ist, die mit ihrer Schleifscheibe abgedichtet aus der Schleifkammer herausgeführt ist, außerhalb der Schleifkammer zusammen mit ihrem Antrieb auf einem Kreuzschlitten angeordnet ist und sich auf diese Weise radial sowie parallelachsig zu einem an der Brillenglashaltewelle angeordneten Brillenglasrohling bewegen läßt.

Bei dieser Brillenglasrandschleifmaschine ist ein durch die Anordnung bedingter, erhöhter Platzbedarf zu verzeichnen und sind die Kreuzschlittenführungen hochgenaue Bauelemente, die verhältnismäßig kostspielig in der Herstellung und empfindlich gegen Verschmutzung sind. Dies gilt auch für eine in der FR-Patentanmeldung 2 553 323 beschriebene Brillenglasrandschleifmaschine, bei der nur die Schleifscheibe und ihr Antriebsmotor auf einer Schlittenführung angeordnet sind, während ein eine Brillenglashaltwelle tragender Arm, der auch eine den an der Brillenglashaltewelle angeordneten Brillenglasrohling und die Schleifscheibe umfassende Schleifkammer trägt, nur um eine waagerechte Achse schwenkbar ist.

Demgegenüber ist die Brillenglasrandschleifmaschine gemäß der deutschen Patentschrift 43 09 101 weniger aufwendig in der Herstellung, da hier die Schleifscheibe mit ihrem Antrieb fest in einem Maschinenunterteil angeordnet ist und demgegenüber die Brillenglashaltewelle an einem senkrecht auf- und abbeweglichen sowie um eine senkrechte Achse schwenkbaren Maschinenoberteil angeordnet ist. Die Säulenführung läßt sich hochgenau und stabil mit einfachen Mitteln gestalten, jedoch besteht bei dieser bekannten Brillenglasrandschleifmaschine, trotz der vorgesehenen Abdeckungen für die Schleifscheibe und den von der Brillenglashaltewelle gehaltenen Brillenglasrohling die Gefahr der Verschmutzung von empfindlichen Maschinenteilen durch die in den Bereich zwischen der Schleifscheibe und dem Brillenglasrohling gesprühte Kühlflüssigkeit, die mit dem Abrieb vom Brillenglas von der Schleifscheibe abgeschleudert wird, da sich zwischen dem Maschinenunterteil, mit einer Mulde, in der die Schleifscheibe angeordnet ist und dem Maschinenoberteil mit der Brillenglashaltewelle ein unvermeidlicher Spalt befindet, durch den die Kühlflüssigkeit in den Bereich der Führungen für das Maschinenoberteil gelangen kann.

Aus der GB 2 183 184 A ergibt sich eine Brillenglasrandschleifmaschine mit CNC-Steuerung mit einer an einem Maschinenunterteil angeordneten Führungssäule, an der ein Führungskörper auf- und abbeweglich, aber um die Achse der Führungssäule nicht schwenkbar gelagert ist. An diesem Führungskörper ist wiederum ein Schwenkarm um eine Achse auf- und abschwenkbar sowie in Richtung der Achse axial verschiebbar in Kugelführungen gelagert. Die Steuerung der Auf- und Abbewegung des Führungskörpers erfolgt durch einen Antrieb mit einer Gewindebuchse und einer Gewindespindel und einem daran befestigten Zapfen, auf dem der Führungskörper in einer durch die CNC-Steuerung bestimmten Höhenlage ruht.

Beim Schleifen eines Brillenglases wird der Schwenkarm mit dem eingesetzten Brillenglasrohling auf die Schleifscheibenanordnung aufgesetzt und schwenkt nach oben. Während des Schleifvorgangs schwenkt der Schwenkarm aufgrund seines Eigengewichts abwärts, wobei in den Brillenglasrohling vom Umfang her ein kreisförmiger Anschliff eingeschliffen wird, bis der Schwenkarm seine horizontale Lage erreicht hat, d. h. eine zur Achse parallele Welle auf einem Anschlag am Führungskörper zur Anlage gekommen ist.

Der Erfindung liegt in erster Linie das Problem zugrunde, eine Brillenglasrandschleifmaschine ähnlich der in der deutschen Patentschrift 43 09 101 beschriebenen Art so zu gestalten, daß sie bei einfachem Aufbau mindestens den gleichen Schutz vor abspritzender Kühlflüssigkeit bietet wie die Brillenglasrandschleifmaschine gemäß der deutschen Patentschrift 36 08 957. Des weiteren sollen geeignete Antriebe für die Heb- und Senkbewegung sowie die Schwenkbewegung geschaffen werden, die für eine CNC-Steuerung geeignet sind. Schließlich soll auch noch eine vorteilhafte Anordnung einer Einrichtung zum Steuern des Schleifvorgangs vorgeschlagen werden.

Zur Lösung dieses Problems werden Brillenglasrandschleifmaschinen gemäß Anspruch 1 und Anspruch 2 vorgeschlagen.

Da diese Schleifkammer sowohl die Brillenglashaltewelle als auch die Schleifscheibe abgedichtet umschließt, kann die von der Schleifscheibe abspritzende Kühlflüssigkeit nicht in den Bereich von Antrieben und Führungen gelangen, wobei jedoch die Brillenglashaltewelle über einen Klappdeckel an der Schleifkammer von außen gut zugänglich ist und sich der Schleifvorgang durch den Klappdeckel, wenn er durchsichtig ausgebildet ist, gut beobachten läßt.

Bei der Ausführungsform des Anspruchs 1 dient somit die Führungssäule sowohl als Linearführung für die Auf- und Abbewegung des Maschinenoberteils als auch als Schwenkführung um die Achse der Führungssäule. Durch die Anordnung der Schleifkammer am Maschinenoberteil, die die Brillenglashaltwelle und die Schleifscheibe eng umschließt, wird die von der Schleifscheibe abspritzende Kühlflüssigkeit mit Sicherheit von der Säulenführung und vom Schleifscheibenantrieb ferngehalten.

Bei der Ausführungsform des Anspruchs 2 können die Schleifkammer und die Brillenglashaltewelle mit ihrem Antrieb an einem oberen Bereich eines Maschinenunterteils abgestützt angeordnet sein, während die Schleifscheibe darunter mit ihrem Antrieb an einem an einer senkrechten Führungssäule auf- und abbeweglichen und um die Achse der Führungssäule schwenkbaren Arm angeordnet ist, wobei ihre Schleifspindel abgedichtet in die Schleifkammer geführt ist.

Auch bei dieser Ausführungsform ist somit die Schleifkammer am Maschinenoberteil befestigt und umschließt die Brillenglashaltewelle und die Schleifscheibe. Die Schleifscheibe vollführt hierbei die Relativbewegungen zur Brillenglashaltewelle und zu dem darin eingespannten Brillenglasrohling, ohne daß sich an den Abdichtungen und der Wirksamkeit der Abdichtungen gegenüber Antrieben und Führungen etwas ändert.

Die Abdichtung zwischen der Schleifspindel und der Schleifkammer kann bei beiden Ausführungsformen aus einem einfachen Faltenbalg bestehen, der genügend Beweglichkeit für die Relativbewegungen zwischen der Schleifkammer und der Schleifspindel zuläßt.

Um den beim Schleifen entstehenden Abrieb aus der Schleifkammer abführen zu können, kann auf den Bereich zwischen dem Brillenglasrohling und der Schleifscheibenoberfläche ein Kühlflüssigkeitsstrahl gerichtet sein, der beispielsweise aus Frischwasser oder aus im Umlauf gefiltertem Kühlwasser bestehen kann. In beiden Fällen ist es vorteilhaft, im unteren Bereich der Schleifkammer einen zum Maschinenunterteil geführten Kühlflüssigkeitsablauf vorzusehen, der in eine trichterartig geformte Auffangwanne am Maschinenunterteil ragt, von wo die aufgefangene Kühlflüssigkeit in einen Auffangbehälter fließt. Gegebenenfalls kann der Flüssigkeitsablauf auch zum Maschinenunterteil hin abgedichtet sein, wobei diese Abdichtung ebenfalls aus einem Faltenbalg bestehen kann Wird als Kühlflüssigkeit Frischwasser verwendet, gelangt die aus dem Kühlflüssigkeitsabfluß abfließende Kühlflüssigkeit in einen Abscheider für den Schleifabrieb und wird dann in die Kanalisation geleitet. Wird die Kühlflüssigkeit im Umwälzverfahren eingesetzt, wird die Kühlflüssigkeit durch eine Kühlflüssigkeitspumpe nach dem Abscheider aufgenommen und den Düsen wieder zugeführt.

Die Schleifkammer kann im wesentlichen parallelepipedisch mit einer Vorderwand, einer Rückwand, zwei Seitenwänden mit abgedichten Durchführungen für die Brillenglashaltewelle und die Schleifspindel, einer Oberwand mit einem Klappdeckel, einem Boden mit dem Kühlflüssigkeitsablfluß und einem Kühlflüssigkeitszulauf im oberen Bereich der Rückwand zum flächigen, nach Art eines Wasservorhangs Benetzen der Rückwand wenigstens im Bereich der Breite der Schleifscheibe ausgebildet sein, so daß sich beim Schleifen von Kunststoffgläsern keine aus Schleifabrieb bestehenden Klumpen an der Rückwand bilden können, die den Schleifvorgang stören können und schwierig zu entfernen sind.

Zum einfachen Auswechseln von Schleifscheiben kann die Schleifkammer in der Seitenwand, die der Seitenwand mit der Durchführung für die Schleifspindel gegenüberliegt, eine verschließbare Öffnung mit einem den Durchmesser der Schleifscheibe übersteigenden Durchmesser aufweisen.

Bei einer Brillenglasrandschleifmaschine mit CNC-Steuerung gemäß Anspruch 1 ist es vorteilhaft, eine an einem Maschinenunterteil angeordnete Führungssäule, eine mit ihrem Antrieb an einem an der Führungssäule auf- und abbeweglichen und um die Achse der Führungssäule schwenkbaren Maschinenoberteil angeordnete Brillenglashaltewelle oder eine mit ihrem Antrieb von einem an der Führungssäule auf- und abbeweglichen und um die Achse der Führungssäule schwenkbar angeordneten Arm getragene Schleifscheibe, eine in der Führungssäule auf- und abbewegliche sowie drehbar geführte Tragsäule für das Maschinenoberteil oder den Arm, einen koaxial in der Führungssäule angeordneten, an der Tragsäule angreifenden Antrieb für die Höhenverstellung der Tragsäule und einen Antrieb zum Schwenken der Tragsäule um die Achse der Führungssäule vorzusehen, bei der sich besonders vorteilhaft die die Schleifscheibe und die Brillenglashaltewelle umschließende Schleifkammer verwenden läßt.

Zum spiel- und reibungsarmen auf- und abbeweglichen und schwenkbaren Führen der Tragsäule kann eine Kugelbuchse in der Führungssäule angeordnet sein.

Im einzelnen läßt sich die Auf- und Abbewegung der Tragsäule durch eine in der Führungssäule in Radial- und Axialwälzlagern geführte, über eine drehfest aber axial verschiebbar in der Führungssäule angeordneten Gewindebuchse an der Tragsäule angreifende, durch einen Stellmotor in Drehung versetzbare Gewindespindel bewerkstelligen, wobei ein weiteres Axialwälzlager zwischen der Gewindebuchse und der Tragsäule angeordnet sein kann.

Der Antrieb zum Schwenken der Tragsäule kann aus einem im Maschinenoberteil angeordneten, eine Gewindespindel drehend antreibenden Stellmotor sowie einer mit der Gewindespindel zusammenwirkenden Gewindemutter bestehen, wobei die Gewindemutter relativ zur Führungssäule senkrecht verschiebbar durch eine an der Führungssäule angeordnete Führungsstange geführt ist

Wird als Stellmotor ein Gleichstrommotor verwendet, läßt sich die Stellung der Gewindespindel in der Gewindebuchse durch einen mit der Gewindebuchse und der Führungssäule in Wirkverbindung stehenden Weggeber aufnehmen, der den Stellmotor entsprechend einer vorgebbaren Brillenglasform über die CNC-Steuerung ansteuert.

Im einzelnen kann der Weggeber so gestaltet sein, daß die Gewindebuchse gegen Verdrehen durch einen radialen, in einem axialen Schlitz geführten Stift gesichert ist, der als Träger für einen Encoder dient und eine an der Führungssäule angeordnete Zahnstange mit einem Zahnrad am Encoder zur Aufnahme des Weges der Gewindebuchse zusammenwirkt.

Diese Brillenglasrandschleifmaschine gemäß Anspruch 1 kann vorzugsweise eine an einem Maschinenunterteil angeordnete, um eine waagerechte Achse im Bereich des Maschinenunterteils kippbare Führungssäule, eine in der Führungssäule auf- und abbeweglichen sowie drehbar geführte Tragsäule, ein an der Tragsäule befestigtes Maschinenoberteil, eine mit ihrem Antrieb im Maschinenoberteil angeordnete Brillenglashaltewelle, eine auf dem Maschinenunterteil mit ihrem Antrieb angeordnete Schleifscheibe und einen im Bereich des oberen Endes der Führungssäule angeordneten Schaltkontakt, der sich öffnet oder schließt, wenn ein in die Brillenglashaltewelle eingespanntes Brillenglas mit einem vorgegebenen Druck auf der Schleifscheibe aufliegt, aufweisen. Diese Anordnung läßt sich mit besonderen Vorteilen in Verbindung mit einer die Schleifscheibe und die Brillenglashaltewelle umschließenden Schleifkammer und/oder einem CNC-gesteuerten Antrieb zur Höhenverstellung der Tragsäule und einem Antrieb zum Schwenken der Tragsäule um die Achse der Führungssäule verwenden, wobei der Schaltkontakt dazu dient, ein schrittweises Weiterdrehen der Brillenglashaltewelle mit dem zu schleifenden Brillenglas zu bewirken, wenn das Brillenglas mit dem vorgebbaren Druck auf der Schleifscheibe aufliegt und den Schleifvorgang zu beenden,wenn die Brillenglashaltewelle mit dem eingespannten Brillenglas eine vollständige Umdrehung mit diesem vorgebbaren Druck auf der Schleifscheibe vollführt.

Im einzelnen ist es vorteilhaft, wenn ein die waagerechte Schwenkachse bildendes Lager beabstandet zur senkrechten Achse der Führungssäule und parallel zur Schleifscheibenachse an einer Konsole der Führungssäule angeordnet ist, diametral gegenüberliegend eine weitere Konsole an der Führungssäule angeordnet ist, die über eine federnd elastische Abstützung mit dem Maschinenunterteil zusammenwirkt, wobei diese federnd elastische Abstützung durch eine Einstellschraube, die sich über eine Feder am Maschinenunterteil abstützt und in die Konsole einschraubbar ist, gebildet sein kann. Der am oberen Ende der Führungssäule angeordnete Schaltkontakt kann aus einem radial abstehenden, einstellbaren Schaltstößel und einem damit zusammenwirkenden, dazu radial angeordneten, vorzugsweise als Näherungsschalter ausgebildeten Schalter bestehen.

Sowohl die federnd elastische Abstützung als auch der radial einstellbare Schaltstößel in Verbindung mit einem Nährungsschalter lassen sich so einstellen, daß der Schaltvorgang feinfühlig mit großer Genauigkeit, die in der Größenordnung von 0,01 bis 0,05 mm und einer Auflagekraft von gleich oder weniger als 20 N liegt, ausgelöst wird.

Bei allen vorgenannten Brillenglasrandschleifmaschinen mit Führungssäule läßt sich auf einfache Weise eine sowohl zum Schleifen von Silikatgläsern als auch zum Schleifen von Kunststoffgläsern geeignete Vorschleifscheibe beiderseits einer Feinschleifscheibe mit einer Facettennut anordnen, wobei die Feinschleifscheibe mit der Facettennut so angeordnet ist, daß die Achse der Brillenglashaltewelle beim Schleifen der Dachfacette eines Brillenglases in einer Mittellage im wesentlichen parallel zur Achse der Schleifscheibe liegt und nur ein geringfügiges Schwenken beim Schleifen der Dachfacette eines Brillenglases entsprechend der Raumkurve des Umfangs des Brillenglases um die senkrechte Achse der Führungssäule erfolgt. Auf diese Weise werden Verzeichnungen im Feinschliff vermieden. Demgegenüber schwenkt das formzuschleifende Brillenglas beim Vorschleifen seitlich auf die Vorschleifscheibe zum Vorschleifen von Silikatgläsern oder auf die andere Seite auf die Vorschleifscheibe zum Vorschleifen von Kunststoffgläsern aus und schwenkt beim Vorschleifen über die Breite der Vorschleifscheibe hin und her, um eine gleichmäßige Abnutzung der Vorschleifscheibe zu erreichen. Geringfügige Verzeichnungen, die beim Schleifen unter dieser Schräglage entstehen, werden beim anschließenden Feinschliff auf der mittig angeordneten Feinschleifscheibe ausgeglichen.

Die Erfindung wird nachstehend anhand eines in der Zeichnung dargestellten Ausführungsbeispiels des näheren beschrieben. In der Zeichnung zeigen:
- Fig. 1: eine perspektivische Ansicht einer erfindungsgemäßen Brillenglasrandschleifmaschine ohne Abdichtung eines Kühlflüssigkeitsabflusses und
- Fig. 2: eine schematische Schnittansicht einer erfindungsgemäßen Brillenglasrandschleifmaschine mit Abdichtung eines Kühlflüssigkeitsabflusses.

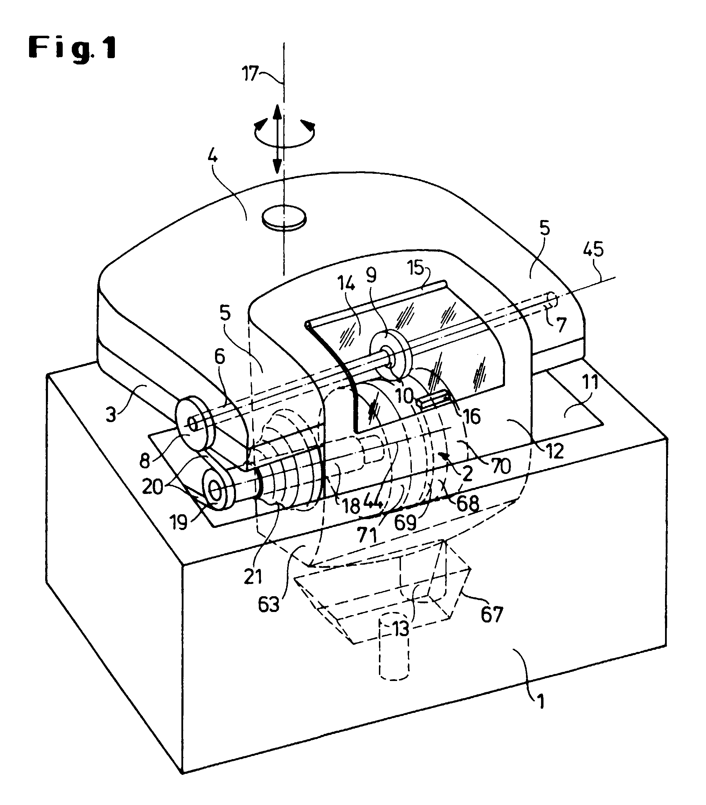

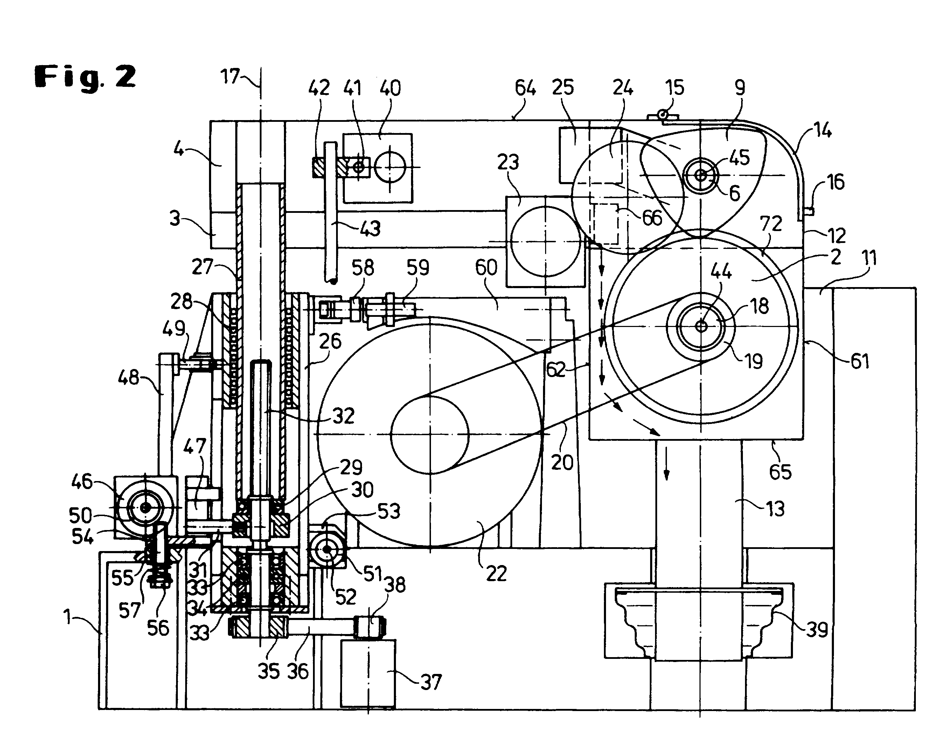

Eine Brillenglasrandschleifmaschine ist schematisch und perspektivisch in Fig. 1 dargestellt, von der ein Maschinenunterteil 1 gezeichnet ist, in dem die gesamte Mechanik und Elektrik zum Durchführen des Schleifvorganges und zum Steuern desselben angeordnet sind. Ein Schleifscheibenpaket 2 aus einer mittigen Feinschleifscheibe 68 mit einer Facettennut 69 und beidseitig angeordneten Vorschleifscheiben 70, 71, wovon die eine zum Vorschleifen von Silikatgläsern und die andere zum Vorschleifen von Kunststoffgläsern bestimmt ist, ist mit seiner Schleifspindel 18 im Maschinenunterteil 1 gelagert und wird von einem Elektromotor 22 über einen Antriebsriemen 20 und eine Riemenscheibe 19 in schnelle Drehung versetzt. Die Facettennut 69 der Feinschleifscheibe 68b liegt fluchtend zu einer Achse 17 einer Führungssäule 26 für ein Maschinenoberteil 3 derart, daß eine Achse 45 einer Brillenglashaltewelle 6, 7 beim Schleifen der Dachfacette eines Brillenglases 9 in einer Mittellage im wesentlichen parallel zu einer Achse 44 des Schleifscheibenpakets 2 liegt. Das Maschinenoberteil 3 ist um die senkrechte Achse 17 schwenkbar und auf- und abbeweglich gelagert Ein Maschinenoberteilgehäuse 4 deckt das Maschinenoberteil 3 und dessen seitlichen Arme 5 ab. In den seitlichen Armen 5 sind eine Halbwelle 6 und eine Halbwelle 7 koaxial gelagert und lassen sich mittels eines in Fig. 2 dargestellten Antriebs 23, 24 in langsame Drehung versetzen. Die Halbwellen 6, 7 dienen zum Einklemmen eines Brillenglasrohlings 9 mittels eines Blocks oder Saugers 10, wodurch der Brillenglasrohling 9 in Bereitschaft gebracht wird, den Umfangsformschliff durchzuführen. Die Halbwellen 6, 7 bilden somit die Brillenglashaltewelle für den Brillenglasrohling 9.

Um einen Brillenglasrohling 9 einzuspannen, wird die eine Halbwelle 6 axial verschoben, z. B. mittels eines Betätigungsknopfes 8. Ebenso ist es möglich, wie in Fig. 2 dargestellt, für die Axialverschiebung der Halbwelle 6 einen steuerbaren Antrieb 25 vorzusehen.

Zwischen den Armen 5 des Maschinenoberteils 3 ist eine Schleifkammer 12 angeordnet, die den Bereich der Halbwellen 6, 7 zwischen den Armen 5 und des Schleifscheibenpakets 2 umschließt Die Schleifkammer ist im wesentlichen parallelepipedisch mit einer Vorderwand 61, eine Rückwand 62. zwei Seitenwänden 63 mit abgedichteten Durchführungen für die Halbwellen 6, 7 und die Schleifspindel 18 einer Oberwand 64 mit einem Klappdeckel 14 und einem Boden 65 gestaltet. Ein am unteren Teil der Schleifkammer 12 angeordneter Kühlflüssigkeitsabfluß 13 ragt in eine trichterartig ausgebildete Auffangwanne 67 im Maschinenunterteil 1 hinein, von wo die Kühlflüssigkeit in einen nicht dargestellten Auffangbehälter zur weiteren Aufbereitung abfließt.

Zwischen der Schleifspindel 18 und einer Seitenwand 63 der Schleifkammer 12, durch die die Schleifspindel 18 hindurchgeführt ist, ist ein Faltenbalg 21 angeordnet, der mit der Seitenwand 63 der Schleifkammer 12 und der Schleifspindel 18 dicht verbunden ist, der Schleifkammer 12 jedoch relativ zur Schleifspindel 18 ausreichend Bewegungsspielraum in Richtung der Schwenkachse 17 und um diese Schwenkachse 17 herum gibt. In der dieser Seitenwand 63 gegenüberliegenden Seitenwand 63 ist zum Auswechseln der Schleifscheiben 68, 70, 71 eine verschließbare Öffnung 72 mit einem den Durchmesser der Schleifscheiben 68, 70, 71 übersteigenden Durchmesser angeordnet.

Die Schleifkammer 12 ist mittels des durchsichtigen Klappdeckels 14 verschlossen, der an der Oberwand 64 der Schleifkammer 12 mittels eines Scharniers 15 angelenkt ist und sich durch Angreifen an eine Handhabe 16 in die geöffnete Stellung hochklappen läßt.

In Fig. 2 sind der am Maschinenunterteil 1 befestigte Antriebsmotor 22 für die Schleifscheibe 2 und der im Maschinenoberteil 3 angeordneter Antriebsmotor 23 ersichtlich, der die Brillenglashaltewelle 6, 7 über Zwischenräder 24 antreibt. Auch der Antrieb 25 für die Axialverstellung der Halbwelle 6 ist am Maschinenoberteil 3 angeordnet.

Eine senkrechte, rohrförmige Führungssäule 26, die am Maschinenunterteil 1 befestigt ist, dient als Führung für eine am Maschinenoberteil 3 befestigte Tragsäule 27, die in der senkrechten Säule 26 mittels einer Kugelbuchse 28 praktisch spielfrei geführt ist.

Das untere Ende der Tragsäule 27 ruht auf einem Axialkugellager 29 und läßt sich somit im wesentlichen reibungsfrei in der Kugelbuchse drehen und axial verschieben.

Die Axialverschiebung der Tragsäule 27 wird durch eine Gewindespindel 32 bewirkt, die in eine Gewindebuchse 30 unterhalb des Axiallagers 29 geschraubt ist. Die Gewindebuchse 30 ist mittels eines in einem axialen Schlitz 47 geführten Stiftes 31 gegen Verdrehen gegenüber der senkrechten Säule 26 gesichert. Die Gewindespindel 32 ist mittels paralleler Radiallager 33 in der senkrechten Säule 26 gelagert, während ein weiteres Axiallager 34 die Last des Maschinenoberteils 3 mit allen daran angeordneten Bauelementen aufnimmt.

Die Gewindespindel 32 wird von einem Höhenverstellantrieb in Form eines Stellmotors 37 über eine Riemenscheibe 38, einen Zahnriemen 36 und eine Riemenscheibe 35 in Drehung versetzt. Der Stellmotor 37 wird von einer nicht dargestellten CNC-Steuerung beaufschlagt und bewegt das Maschinenoberteil 3 und damit die Brillenglashaltwelle 6, 7 mit einem eingespannten Brillenglas 9 entsprechend der zu schleifenden Brillenglaskontur auf und ab.

Wird als Stellmotor 37 ein Gleichstrommotor verwendet, wird die Höhenlage der Gewindebuchse 30 und damit des Brillenglases 9 bezüglich des Schleifscheibenpakets 2 durch einen Weggeber erfaßt, der aus einen am Stift 31 befestigten Encoder 46 und einer an der Führungssäule 26 mittels eines Halters 48 befestigten Zahnstange 48, in die ein Zahnrad 50 am Encoder 46 eingreift, besteht.

Für das gesteuerte Schwenken um die senkrechte Achse 17 ist ein Schwenkantrieb in Form eines Stellmotors 40 im Maschinenoberteil 3 vorgesehen. Dieser Stellmotor 40 treibt eine Gewindespindel 41 an, die auf eine Gewindemutter 42 wirkt. Diese Gewindemutter 42 umgreift eine an der senkrechten Säule 26 befestigte Führungsstange 43, so daß ein Verschieben der Gewindemutter 42 auf der Gewindespindel 41 aufgrund einer Drehung der Gewindespindel 41 ein Schwenken des Maschinenoberteils 3 um die senkrechte Achse 17 bewirkt. Diese senkrechte Achse 17 ist beabstandet zu den waagerechten Drehachse 44, 45 der Schleifscheibe 2 und der Brillenglashaltewelle 6, 7. Die Führungsstange 43 kann auch an der Gewindemutter 42 befestigt und in einer Führung an der Führungssäule 26 verschiebbar sein.

Das Schwenken um die senkrechte Achse 17 bewirkt, daß sich der Brillenglasrohling 9 über die Breite der Schleifscheibe 2 hin- und herbewegen läßt. Diese gleichmäßige Hin- und Herbewegung dient einerseits dazu, eine gleichmäßige Abnutzung der zylindrischen Vorschleifscheiben 70, 71 zu erreichen. Andererseits läßt sich diese gesteuerte Bewegung dazu benutzen, den Brillenglasrohling 9 nach Beendigung des Vorschleifens in die Facettennut 69 der Feinschleifscheibe 68 umzusetzen und eine Dachfacette an das formgeschliffene Brillenglas 9 anzuschleifen.

Dieses Facettenschleifen kann als freies Schleifen erfolgen, wenn das formgeschliffene Brillenglas mit seiner gesamte Breite in die Facettennut eintauchen kann, so daß die Umfangskontur des formgeschliffenen Brillenglases den Verlauf der Dachfacette bestimmt.

Ebenso ist es möglich, beim Schleifen der Dachfacette eine Steuerung der Schwenkbewegung um die Achse 17 mittels des Schwenkantriebs 40, 41, 42, 43 durchzuführen, so daß die Dachfacette auf dem Umfang des vorgeschliffenen Brillenglases einen vorbestimmten Verlauf erhält.

Zum Steuern der Drehbewegung der Brillenglashaltewelle 6, 7 während des Schleifvorganges und zum Feststellen des Endes des Schleifvorganges dient ein Schaltkontakt 58, 59, der sich öffnet oder schließt, wenn der Auflagedruck des in die Brillenglashaltewelle 6, 7 eingespannten Brillenglases 9 auf einer der Schleifscheiben 68, 70, 71 unter einen vorgebbaren Druck von beispielsweise 20 N absinkt.

Zu diesem Zweck ist die Führungssäule 26 mittels eines seitlich in einer Konsole 53 am unteren Ende der Führungssäule 26 angeordneten Lagers 51 um eine Achse 52 schwenkbar am Maschinenunterteil 1 gelagert. Die Schwenkachse 52 verläuft parallel zur Drehachse 54 des Schleifscheibenpakets 2. Diametral gegenüber dem Lager 51 ist eine weitere Konsole 54 an der Führungssäule 26 angeordnet, in die sich eine durch eine Bohrung im Maschinenunterteil 1 geführte Schraube 55 mit Sechskantkopf 56 mehr oder weniger weit einschrauben läßt. Zwischen dem Sechskantkopf 56 und dem Maschinenunterteil 1 ist eine Druckfeder 57 angeordnet. Am oberen Ende der Führungssäule 26 ist ein radial zum Schleifscheibenpaket 2 gerichteter, einstellbarer Schaltstößel 58 angeordnet, der mit einem an einem Träger 60 angeordneten Nährungsschalter 59 zusammenwirkt.

Wird ein zu schleifendes Brillenglas 9 auf eine der Schleifscheiben 68, 70, 71 aufgesetzt, kippt das Maschinenoberteil 3 geringfügig um die Kippachse 52, der Schaltstößel 58 entfernt sich vom Nährungsschalter 59 und die Brillenglashaltewelle 6, 7 mit dem eingespannten Brillenglas 9 dreht sich während des Schleifvorganges solange nicht, bis eine durch die Einstellung der Gewindebuchse 30 bestimmte Höhenlage der Brillenglashaltewelle 6, 7 bezüglich der entsprechenden Schleifscheibe erreicht ist. Hierdurch sinkt die Auflagekraft des Brillenglases 9 auf der jeweiligen Schleifscheibe auf den vorgegebenen Wert von beispielsweise 20 N, das Maschinenoberteil kippt um die Kippachse 52 entgegen der einstellbaren Kraft der Feder 57, der Nährungsschalter 49 wird durch die Annäherung des Schaltstößels 58 aktiviert und bewirkt über ein Signal an die CNC-Steuerung ein Weiterdrehen der Brillenglashaltewelle 6, 7 mit dem Brillenglas 9, wodurch erneut ein Kippen des Maschinenoberteils 3 in entgegengesetzter Richtung und eine entsprechendes Desaktivieren des Nährungsschalters 59 erfolgt, bis in dieser Winkelstellung der Brillenglashaltewelle 6, 7 wieder der vorgegebene Wert erreicht ist. Auf diese Weise wird durch schrittweises Drehen der Brillenglashaltewelle 6, 7 der Formschliff des Brillenglases 9 gesteuert. Dieser Formschliff ist beendet, wenn der Nährungskontakt 59 über eine vollständige Umdrehung der Brillenglashaltewelle 45 mit dem eingespannten Brillenglas 9 ununterbrochen aktiviert bleibt, was ein Zeichen für die Beendigung des Schleifvorgangs ist, so daß das Brillenglas 9, wenn beispielsweise der Vorschliff auf diese Weise durchgeführt wurde, in die Facettennut 69 der Feinschleifscheibe 68 umgesetzt und derselbe Vorgang wiederholt wird. Durch Einstellen der Vorspannung der Feder 57 mittels der Einstellschraube 55 und des Abstandes des Schaltstößels 58 vom Nährungsschalter 59 läßt sich das Schleifen von Brillengläsern feinfühlig und hochgenau steuern

Während des Schleifens wird mittels nicht dargestellter Düsen Kühlflüssigkeit in den Bereich zwischen dem Brillenglasrohling 9 und der Schleifscheibenoberfläche gesprüht, die auch dazu dient, den Schleifabtrieb abzuführen. Ein weiterer Kühlmittelflüssigkeitszulauf 66 ist an der Rückwand 62 der Schleifkammer 12 angeordnet und sorgt für eine fläche Benetzung der Rückwand 62 wenigstens entsprechend der Breite des Schleifscheibenpakets 2 nach Art eines Flüssigkeitsvorhangs. Hierdurch wird der Schleifabrieb beim Schleifen von Kunststoffgläsern abgespült, und es können sich keine schwer zu entfernenden und den Schleifvorgang störenden Klumpen bilden Da die Schleifkammer 12 allseitig mit Aufnahme des Abflusses 13 geschlossen ist, können keine Kühlflüssigkeit und kein Schleifabrieb während des Schleifvorgangs aus der Schleifkammer 12 heraus in den Bereich der Steuerung und der Antriebe im Maschinenober- und -unterteil 3, 1 gelangen. Die Kühlflüssigkeit wird vielmehr über den Abfluß 13, der bei der Ausführungsform gemäß Fig 2 mittels eines Faltenbalges 39 gegenüber dem Maschinenunterteil 1 abgedichtet sein kann, zu einem nicht dargestellten Abscheider geführt, wo der Schleifabrieb von der Kühlflüssigkeit abgetrennt wird. Wenn den erwähnten Düsen Frischwasser als Kühlwasser zugeführt wird, kann das von Schleifabrieb befreite Kühlwasser unmittelbar in die Kanalisation geleitet werden. Es ist jedoch auch möglich, die Kühlflüssigkeit im Kreislauf zu führen, indem eine Umwälzpumpe vorgesehen wird, die die gereinigte Kühlflüssigkeit nach dem Abscheiden ansaugt und wieder den Düsen zuführt. In diesem Falle bereitet es auch keine Probleme, der Kühlflüssigkeit Zusätze beizugeben, z B. korrosionsverhindernde und schaumbeseitigende Zusätze.

Statt das Maschinenoberteil 3 mit der Brillenglashaltewelle 6, 7 und allen Antrieben sowie der Schleifkammer 12 heb-, senk- und schwenkbar anzuordnen, ist es auch möglich, das Maschinenoberteil 3 am Maschinenunterteil 1 abzustützen und das Schleifscheibenpaket 2 mit der Schleifspindel 18 und dem Antriebsmotor 22 an einem Arm entlang der senkrechten Achse 17 heb- und senkbar sowie um diese senkrechte Achse 17 schwenkbar anzuordnen. Die Antriebe für die Heb- und Senkbewegung sowie für die Schwenkbewegung können analog zu den entsprechenden Antrieben für das bewegliche Maschinenoberteil 3 gestaltet sein. Die bewegliche Durchführung der Schleifspindel 18 durch eine Seitenwand 63 der Schleifkammer 12 und ihre Abdichtung mittels eines Faltenbalges 21 können ebenfalls analog gestaltet sein. Bei dieser Anordnung ist eine bewegliche Durchführung des Abflusses 13 durch das Maschinenunterteil 1 nicht erforderlich, so daß auch eine einfachere Abdichtung als die mittels des in Fig. 2 dargestellten Faltenbalges 39 möglich ist.

Ggf kann das Maschinenoberteil 3 mit dem Gehäuse 4 in einer nicht dargestellten Haube angeordnet sein, die auch die CNC-Steuerung für die Brillenglasrandschleifmaschine aufnehmen sowie auf einer Vorderwand einen Bildschirm und eine Tastatur zur Eingabe von Daten und Befehlen aufweisen kann.

Die erfindungsgemäße Brillenglasrandschleifmaschine zeichnet sich durch eine einfache Säulenführung für das Maschinenoberteil oder die Schleifscheibe mit Antrieb aus, wobei sowohl die Säulenführung als auch die Antriebe durch die die Brillenglashaltewelle 6, 7 und die Schleifscheibe 2 umschließende Schleifkammer gegen von der sich drehenden Schleifscheibe 2 abspritzende Kühlflüssigkeit geschützt sind und die Maschine durch Schleifabrieb nicht verschmutzt wird. Die Antriebe zum Höhenverstellen und Schwenken der Tragsäule 27 lassen sich ebenso wie der Schaltkontakt 58, 59 platzsparend und funktional in die Maschine integrieren, wodurch eine große Funktionssicherheit und Genauigkeit bei der Brillenglasrandbearbeitung gewährleistet sind; dennoch ist die erfindungsgemäße Maschine einfach und robust gebaut und läßt sich kostengünstig herstellen.

## Patentansprüche

1. Brillenglasrandschleifmaschine mit
- einer mit ihrem Antrieb (22) auf einem eine Führungssäule (26) tragenden Maschinenunterteil (1) angeordneten Schleifscheibe (2),
- einer mit ihrem Antrieb (3, 24)an einem Maschinenoberteil (3) angeordneten und damit geradlinig auf- und ab- sowie um eine zur Schleifscheiben- und Brillenglashaltewellendrehachse (44, 45) beabstandeten und dazu senkrechten Achse (17) der Führungssäule (26) schwenkbaren Brillenglashaltewelle (6, 7),
- einer die Schleifscheibe (2) und die Brillenglashaltewelle (6, 7) umschließenden, gegen von der Schleifscheibe (2) abspritzende Kühlflüssigkeit abgedichteten, am Maschinenoberteil (3) angeordneten Schleifkammer (12) mit einem zum Maschinenunterteil (1) geführten Kühlflüssigkeitsabfluß (13) und
- einer beweglichen Dichtung (21) zwischen der Schleifkammer (12) und einer Schleifspindel (18).

2. Brillenglasrandschleifmaschine mit
- einer mit ihrem Antrieb (22) an einem an einer senkrechten Säule (26) auf- und abbeweglichen und um die Achse (17) der Führungssäule (26) schwenkbaren Arm angeordneten Schleifscheibe (2),
- einer mit ihrem Antrieb (23, 24) oberhalb der Schleifscheibe (2) an einem Maschinenoberteil angeordneten, an einem oberen Bereich eines Maschinenunterteils abgestützten Brillenglashaltewelle (6, 7,)
- einer am Maschinenoberteil befestigten, die Schleifscheibe (2) und die Brillenglashaltewelle (6, 7) umschließenden, gegen von der Schleifscheibe (2) abspritzende Kühlflüssigkeit abgedichteten, am die Brillenglashaltewelle (6, 7) abstützenden oberen Bereich des Maschinenunterteils (1) angeordneten Schleifkammer (12) mit einem zum unteren Bereich des Maschinenunterteils geführten Kühlflüssigkeitsabfluß (13) und
- einer beweglichen Dichtung (21) zwischen der Schleifkammer (12) und einer Schleifspindel (18).

3. Brillenglasrandschleifmaschine nach Anspruch 1 oder 2, **dadurch gekennzeichnet**, daß die Abdichtung zwischen der Schleifspindel (18) und der Schleifkammer (12) aus einem Faltenbalg (21) besteht.

4. Brillenglasrandschleifmaschine nach Anspruch 1 oder 2, **gekennzeichnet durch** eine Abdichtung zwischen der Schleifkammer (12) und dem Maschinenunterteil (1) aus einem Faltenbalg (39)

5. Brillenglasrandschleifmaschine nach Anspruch 1, 2 oder 3, **dadurch gekennzeichnet**, daß der rohrförmige Kühlflüssigkeitsabfluß (13) in eine trichterartig geformte Auffangwanne (67) am Maschinenunterteil (1) ragt und die Kühlflüssigkeit von der Auffangwanne (67) in einen Auffangbehälter fließt.

6. Brillenglasrandschleifmaschine nach einem der Ansprüche 1 bis 5, **gekennzeichnet durch** eine im wesentlichen parallelepipedische Schleifkammer (12) mit einer Vorderwand (61), einer Rückwand (62), zwei Seitenwänden (63) mit abgedichteten Durchführungen für die Brillenglashaltewelle (6, 7) und die Schleifspindel (18), einer Oberwand (64) mit einem Klappdeckel (14), einem Boden (65) mit dem Kühlflüssigkeitsabfluß (13) und einem Kühlflüssigkeitszulauf (66) im oberen Bereich der Rückenwand (62) zum flächigen, nach Art eines Wasservorhangs Benetzen der Rückwand (62) wenigstens im Bereich der Breite der Schleifscheibe (2).

7. Brillenglasrandschleifmaschine nach Anspruch 6, **gekennzeichnet durch** eine verschließbare Öffnung (72) zum Auswechseln der Schleifscheibe (2) in der Seitenwand (63), die der Seitenwand mit der Durchführung für die Schleifspindel (1) gegenüberliegt, mit einem den Durchmesser der Schleifscheibe (2) übersteigenden Durchmesser.

8. Brillenglasrandschleifmaschine mit CNC-Steuerung nach einem der Ansprüche 1 und 3 bis 7 mit
- einer an einem Maschinenunterteil (1) angeordneten Führungssäule (26),
- einer mit ihrem Antrieb (23, 24) an einem an der Führungssäule (26) auf- und abbeweglichen und um die Achse (17) der Führungssäule (26) schwenkbaren Maschinenoberteil (3) angeordneten Brillenglashaltewelle (6, 7) und einer am Maschinenunterteil (1) mit ihrem Antrieb angeordneten Schleifscheibe (2)
- einer in der Führungssäule (26) auf- und abbeweglich sowie drehbar geführten Tragsäule (27) für das Maschinenoberteil (3)
- einem koaxial in der Führungssäule (26) an der Tragsäule (27) angreifenden CNC-gesteuerten Antrieb (30, 31, 32, 35, 36, 37, 38) zur Höhenverstellung der Tragsäule (27)
- einem mit der Tragsäule (27) und der Führungssäule (26) in Wirkverbindung stehenden Weggeber (46, 48, 50) zur Steuerung eines Höhenverstellmotors (37) entsprechend einer vorgebbaren Brillenglasform und
- einem Antrieb (40, 41, 42, 43) zum gleichmäßigen Hin- und Herbewegen eines Brillenglasrohlings (9) auf einer Vorschleifscheibe (70, 71), zum Umsetzen des formgeschliffenen Brillenglases in eine Facettennut (69) einer Feinschleifscheibe (68) und zum Schleifen einer Dachfacette auf dem Umfang des formgeschliffenen Brillenglases entsprechend einem vorbestimmten Verlauf durch gesteuertes Schwenken der Tragsäule (27) und somit der Brillenglashaltewelle (6, 7) um die Achse (17) der Führungssäule (26).

9. Brillenglasrandschleifmaschine mit CNC-Steuerung nach einem der Ansprüche 2 bis 7 mit
- einer an einem Maschinenunterteil (1) angeordneten Führungssäule (26),
- einer mit ihrem Antrieb (22) an einem an der Führungssäule (26) auf- und abbeweglichen und um die Achse (17) der Führungssäule (26) schwenkbaren Arm angeordneten Schleifscheibe (2),
- einer mit ihrem Antrieb (23, 24) an einem feststehenden Maschinenoberteil (3) angeordneten Brillenglashaltewelle (6, 7)
- einer in der Führungssäule (26) auf- und abbeweglich sowie drehbar geführten Tragsäule (27) für den Arm,
- einem koaxial in der Führungssäule (26) an der Tragsäule (27) angreifenden, CNC-gesteuerten Antrieb (30, 31, 32, 35, 36, 37, 38) zur Höhenverstellung der Tragsäule (27),
- einem mit der Tragsäule (27) und der Führungssäule (26) in Wirkverbindung stehenden Weggeber (46, 48, 50) zur Steuerung eines Höhenverstellmotors (37) entsprechend einer vorgebbaren Brillenglasform und
- einem Antrieb (40, 41, 42, 43) zum gleichmäßigen Hin- und Herbewegen einer Vorschleifscheibe (70, 71), zum Umsetzen des formgeschliffenen Brillenglases in eine Facettennut (69) einer Feinschleifscheibe (68) und zum Schleifen einer Dachfacette auf dem Umfang des formgeschliffenen Brillenglases entsprechend einem vorbestimmten Verlauf durch gesteuertes Schwenken der Tragsäule (27) und somit der Schleifscheibe (2) um die Achse (17) der Führungssäule (26).

10. Brillenglasrandschleifmaschine nach Anspruch 8 oder 9, **gekennzeichnet durch** eine Kugelbuchse (28) in der Führungssäule (26) zum spiel- und reibungsarmen auf- und abbeweglichen und schwenkbaren Führen der Tragsäule (27).

11. Brillenglasrandschleifmaschine nach Anspruch 8, 9 oder 10, **gekennzeichnet durch** eine in der Führungssäule (26) in Radial- und Axialwälzlagern (33, 34) geführte, über eine drehfest aber axial verschiebbar in der Führungssäule (26) angeordnete Gewindebuchse (30) an der Tragsäule (27) angreifende, durch einen Stellmotor (37) in Drehung versetzbare Gewindespindel (32).

12. Brillenglasrandschleifmaschine nach Anspruch 11, **gekennzeichnet durch** durch ein Axialwälzlager (29) zwischen der Gewindebuchse (30) und der Tragsäule (27).

13. Brillenglasrandschleifmaschine nach einem der Ansprüche 8 bis 12, **dadurch gekennzeichnet**. daß der Antrieb zum Schwenken der Tragsäule (27) aus einem im Maschinenoberteil (3) angeordneten, eine Gewindespindel (41) drehend antreibenden Stellmotor (40) sowie einer mit der Gewindespindel (41) zusammenwirkenden Gewindemutter (42) besteht und die Gewindemutter (42) relativ zur Führungssäule (26) senkrecht verschiebbar durch eine an der Führungssäule (26) angeordnete Führungsstange (43) geführt ist

14. Brillenglasrandschleifmaschine nach einem der Ansprüche 8 bis 13, **gekennzeichnet durch** einen mit der Gewindebuchse (30) und der Führungssäule (26) in Wirkverbindung stehenden Weggeber (46, 48, 50) zur Steuerung des Stellmotors (37) entsprechend einer vorgebbaren Brillenglasform.

15. Brillenglasrandschleifmaschine nach Anspruch 14, **dadurch gekennzeichnet**, daß die Gewindebuchse (30) gegen Verdrehen durch einen radialen, in einen axialen Schlitz (47) geführten Stift (31) gesichert ist, der als Träger für einen Encoder (46) dient und eine an der Führungssäule (26) angeordnete Zahnstange (48) mit einem Zahnrad (50) am Encoder (46) zur Aufnahme des Weges der Gewindebuchse (30) zusammenwirkt.

16. Brillenglasrandschleifmaschine nach einem der Ansprüche 1 und 3 bis 8 und 10 bis 15 mit
- einer an einem Maschinenunterteil (1) angeordneten, um eine waagerechte Achse (52) im Bereich des Maschinenunterteils (1) kippbaren Führungssäule (26),
- einer in der Führungssäule (26) auf- und abbeweglichen sowie drehbar geführten Tragsäule (27),
- einem an der Tragsäule (27) befestigten Maschinenoberteil (3),
- einer mit ihrem Antrieb (23, 24) im Maschinenoberteil (3) angeordneten Brillenglashaltewelle (6, 7),
- einem auf dem Maschinenunterteil (1) mit ihrem Antrieb (22) angeordneten Schleifscheibenpaket (2) und
- einem im Bereich des oberen Endes der Führungssäule (26) angeordneten Schaltkontakt (58, 59), der sich öffnet oder schließt, wenn ein in die Brillenglashaltewelle (6, 7) eingespanntes Brillenglas (9) mit einem vorgebbaren Druck auf einer der Schleifscheiben (68, 70,71) des Schleifscheibenpakets (2) aufliegt.

17. Brillenglasrandschleifmaschine nach Anspruch 16, **dadurch gekennzeichnet**, daß ein die waagerechte Schwenkachse (52) bildendes Lager (51) beabstandet zur senkrechten Achse (17) der Führungssäule (22) und parallel zur Schleifscheibenachse (44) an einer Konsole (53) am unteren Ende der Führungssäule (22) und diametral gegenüberliegend eine weitere Konsole (54) an der Führungssäule (22) angeordnet ist, die über eine federnd elastische Abstützung (55, 57) mit dem Maschinenunterteil (1) zusammenwirkt.

18. Brillenglasrandschleifmaschine nach Anspruch 17, **dadurch gekennzeichnet**, daß eine Einstellschraube (55), die sich über eine Feder (57) am Maschinenunterteil (1) abstützt, in die Konsole (54) einschraubbar ist.

19. Brillenglasrandschleifmaschine nach einem der Ansprüche 16 bis 18, **dadurch gekennzeichnet**, daß am oberen Ende der Führungssäule ein radial abstehender, einstellbarer Schaltstößel (58) angeordnet ist, der mit einem dazu radial angeordneten, vorzugsweise als Näherungsschalter ausgebildeten Schalter (59) zusammenwirkt.

20. Brillenglasrandschleifmaschine nach einem der Ansprüche 1 bis 19 **gekennzeichnet durch** eine Feinschleifscheibe (68) mit einer Facettennut (69), die so angeordnet ist, daß die Achse (45) der Brillenglashaltewelle (6, 7) beim Schleifen der Dachfacette eines Brillenglases (8) in einer Mittellage im wesentlichen parallel zur Achse (44) der Schleifscheibe (2) liegt und durch beiderseits der Feinschleifscheibe (68) angeordnete Vorschleifscheiben (70, 71), wovon die eine zum Vorschleifen von Silikatgläsern und die andere zum Vorschleifen von Kunststoffgläsern bestimmt ist.

## Claims

1. Spectacle lens rim grinding unit with
- a grinding wheel (2) positioned with its drive (22) on a lower machine component (1) bearing a guide column (26)
- a spectacle lens support shaft (6, 7) with its drive (3, 24) on an upper machine component (3) and which can thus move up and down in a straight line, as well as around an axis (17) of the guide column (26) positioned at a distance from the grinding wheel and spectacle lens support shaft rotation axis (44, 45) and perpendicular thereto
- a grinding chamber (12) positioned on the upper machine component (3) enclosing the grinding wheel (2) and the spectacle lens support shaft (6, 7), sealed against cool liquid spraying from the grinding wheel (2), with a cool liquid outlet (13) leading to the lower machine component (1) and
- a moveable seal (21) between the grinding chamber (12) and a grinding spindle (18).

2. Spectacle lens rim grinding unit with
- a grinding wheel (2) positioned with its drive (22) on an arm which can move up and down on a vertical column (26) and can pivot around the axis (17) of the guide column (26),
- a spectacle lens support shaft (6, 7) with its drive (23, 24) positioned above the grinding wheel (2) on an upper machine component, supported on an upper area of a lower machine component,
- a grinding chamber (12) secured on the upper machine component, enclosing the grinding wheel (2) and the spectacle lens support shaft (6, 7), sealed against cool liquid spraying from the grinding wheel (2), positioned on the upper area of the lower machine component (1) supporting the spectacle lens support shaft (6, 7) with a cool liquid outlet (13) leading to the lower area of the lower machine component and
- a moveable seal (21) between the grinding chamber (12) and a grinding spindle (18).

3. Spectacle lens rim grinding unit according to Claim 1 or 2 characterised in that the seal between the grinding spindle (18) and the grinding chamber (12) consists of a bellows device (21).

4. Spectacle lens rim grinding unit according to Claim 1 or 2 characterised by a seal between the grinding chamber (12) and the lower machine component (1) made from a bellows device (39).

5. Spectacle lens rim grinding unit according to Claim 1, 2 or 3 characterised in that the pipe-form cool liquid outlet (13) projects into a funnel-like strip tank (67) on the lower machine component (1) and the cool liquid flows from the strip tank (67) into a collecting container.

6. Spectacle lens rim grinding unit according to one of the Claims 1 to 5 characterised by as essentially parallelepiped grinding chamber (12) with a front wall (61), a rear wall (62), two side walls (63) with sealed feedthroughs for the spectacle lens support shaft (6, 7) and the grinding spindle (18), an upper wall (64) with a flap lid (14), a floor (65) with the cool liquid outlet (13) and a cool liquid supply (66) in the upper area of the rear wall (62) to the flat moistening area of the rear wall (62) in the form of a water curtain at least in the area of the breadth of the grinding wheel (2).

7. Spectacle lens rim grinding unit according to Claim 6 characterised by a closeable opening (72) for exchanging the grinding wheel (2) in the side wall (63), which lies opposite the side wall with the feedthrough for the grinding spindles (1), with a diameter exceeding the diameter of the grinding wheel (2).

8. Spectacle lens rim grinding unit with CNC control according to one of the Claims 1 and 3 to 7, with
- a guide column (26) positioned on a lower machine component (1)
- a spectacle lens support shaft (6, 7) with its drive (23, 24) on an upper machine component (3) which can be moved up and down on the guide column (26) and pivot around the axis (17) of the guide column (26), and a grinding wheel (2) with its drive positioned on the lower machine component (1)
- a supporting column (27) for the upper machine component (3) passed in the guide column (26) in such a way that it can be moved up and down and rotated therein - a CNC-controlled drive (30, 31, 32, 35, 36, 37, 38) for the height adjustment of the supporting column (27) gripping coaxially in the guide column (26) on the supporting column (27)
- a displacement transmitter (46, 48, 50) in effective connection with the supporting column (27) and the guide column (26) for controlling a height adjustment motor (37) in accordance with a given spectacle lens form
- a drive (40, 41, 42, 43) for regular moving to and fro of a spectacle lens blank (9) on a pre-grinding wheel (70, 71) for transposing the form-ground spectacle lens into a facet groove (69) of a fine grinding wheel (68) and for the grinding of a roof facet on the circumference of the form-ground spectacle lens in accordance with a pre-determined course through controlled pivoting of the supporting column (27) and thus of the grinding wheel (2) around the axis (17) of the guide column (26).

9. Spectacle lens rim grinding unit with CNC control according to one of the Claims 2 to 7 with
- a guide column (26) positioned on a lower machine component (1)
- a grinding wheel (2) with its drive (22) positioned on an arm which can move up and down on the guide column (26) and pivot around the axis of the guide column (26)
- a spectacle lens support shaft (6, 7) with its drive (23, 24) positioned on a fixed upper machine component (3)
- a supporting column (27) for the arm which can be moved up and down in the guide column (26) as well as rotating
- a CNC-controlled drive (30, 31, 32, 35, 36, 37, 38) for height adjustment of the supporting column (27), gripping coaxially in the guide column (26) on the supporting column (27)
- a displacement transmitter (46, 48, 50) in effective connection with the supporting column (27) and the guide column (26) for controlling a height adjustment motor (37) according to a given spectacle lens form and
- a drive (40, 41, 42, 43) for the regular moving to and fro of a pre-grinding wheel (70, 71), for transposing the form-ground spectacle lens into a facet groove (69) of a fine grinding wheel (68) and for the grinding of a roof facet on the circumference of the form-ground spectacle lens in accordance with a pre-determined course through controlled pivoting of the supporting column (27) and thus of the grinding wheel (2) around the axis (17) of the guide column (26).

10. Spectacle lens rim grinding unit according to Claim 8 or 9 characterised by a ball bearing (28) in the guide column (26) for the low-scope and low-friction up and down movement and pivoting guiding of the supporting column (27).

11. Spectacle lens rim grinding unit according to Claim 8, 9 or 10 characterised by a screw (32) passed in the guide column (26) in radial and axial rolling contacts (33, 34) gripping on the support column (27) via a threaded bush (30) which is positioned in a rotation-secure but axially displaceable way in the guide column (26), and which can be set in rotation through a servo-motor (37).

12. Spectacle lens rim grinding unit according to Claim 11 characterised by an axial rolling contact (29) between the threaded bush (30) and the supporting column (27).

13. Spectacle lens rim grinding unit according to one of the Claims 8 to 12 characterised in that the drive for pivoting the supporting column (27) consists of a servo-motor (40) driving a screw (41) in a rotating way and positioned in the upper machine component (3), as well as a threaded nut (42) working together with the screw (41), and wherein the threaded nut (42) is passed in a vertically displaceable way relatively to the guide column (26) through a guide rod (43) positioned on the guide column (26).

14. Spectacle lens rim grinding unit according to one of the Claims 8 to 13 characterised by a displacement transmitter (46, 48, 50) for controlling the servo-motor (37) according to a given spectacle lens form, whereby this displacement transmitter (46, 48, 50) is in effective connection with the threaded bush (30) and the guide column (26).

15. Spectacle lens rim grinding unit according to Claim 14 characterised in that the threaded bush (30) is ensured against adjustment through a radial pin (31) passed into an axial slot (47), which serves as a carrier for an encoder (46), and a toothed rod (48) positioned on the guide column (26) works together with a toothed wheel (50) on the encoder (46) for taking up the path of the threaded bush (30).

16. Spectacle lens rim grinding unit according to one of the Claims 1 and 3 to 8 and 10 to 15 with
- a guide column (26) which is positioned on a lower machine component (1) and can be tilted around a horizontal axis (52) in the area of the lower machine component (1)
- a supporting column (27) passed into the guide column (26) in such a way that it can be moved up and down and in rotation
- an upper machine component (3) secured on the supporting column (27)
- a spectacle lens support shaft positioned with its drive (23, 24) in the upper machine component (3)
- a grinding wheel packet (2) positioned with its drive (22) on the lower machine component (1) and
- a make-and-break contact (58, 59) positioned in the area of the upper end of the guide column (26), which opens or closes when a spectacle lens (9) inserted in the spectacle lens support shaft (6, 7) lies with a given pressure on one of the grinding wheels (68, 70, 71) of the grinding wheel packet (2).

17. Spectacle lens rim grinding unit according to Claim 16 characterised by a bearing (51) forming the horizontal pivot axis (52) at a distance from the vertical axis (17) of the guide column (22) and parallel to the grinding wheel axis (44) on a console (53) at the lower end of the guide column (22) and a further console (54) on the guide column lying diametrally opposite, which works in association with the lower machine component (1) via a spring elastic support (55, 57).

18. Spectacle lens rim grinding unit according to Claim 17 characterised in that an adjusting screw (55) which supports itself via a spring (57) on the lower machine component (1) can be screwed into the console (54).

19. Spectacle lens rim grinding unit according to one of the Claims 16 to 18 characterised in that on the upper end of the guide column there is a switching ram (58) standing out radially at a distance which can be inserted and which works together with a switch (59) which is positioned radially thereto, preferably formed as a proximity switch.

20. Spectacle lens rim grinding unit according to one of the Claims 1 to 19 characterised by a fine grinding wheel (68) with a facet groove (69) which is arranged in such a way that upon grinding of the roof facet of a spectacle lens (8) the axis (45) of the spectacle lens support shaft (6, 7) lies in a middle position essentially parallel to the axis (44) of the grinding wheel (2), and characterised by pre-grinding wheels (70, 71) positioned on both sides of the fine grinding wheel (68), whereby one pre-grinding wheel is intended for pre-grinding of silicate lenses and the other for the pre-grinding of artificial lenses.

## Revendications

1. Machine à mouler le bord de verres de lunettes, comportant :
- un disque de meulage (2), disposé, avec son dispositif d'entraînement (22), sur une partie inférieure (1) de la machine portant une colonne de guidage (26),
- un arbre (6,7) de maintien des verres de lunettes disposé, avec son dispositif d'entraînement (23, 24), sur une partie supérieure (3) de la machine qui peut donc se déplacer en ligne droite dans un mouvement de montée et de descente, et pivoter autour d'un axe (17) de la colonne de guidage (26), espacé de l'axe de rotation (44, 45) du disque de meulage et de l'arbre de maintien des verres de lunettes, et donc perpendiculaire à celui-ci,
- une chambre de meulage (12) qui enferme le disque de meulage (2) et l'arbre (6, 7) de maintien des verres de lunettes, qui est rendue étanche à l'égard du liquide de refroidissement projeté par le disque de meulage (2) et qui est disposée sur la partie supérieure (3) de la machine, avec un écoulement (13) du liquide de refroidissement guidé vers la partie inférieure (1) de la machine, et
- une garniture d'étanchéité (21) déplaçable entre la chambre de meulage (12) et une broche de meulage (18).

2. Machine à meuler le bord de verres de lunettes, comportant :
- un disque de meulage (2), disposé avec son dispositif d'entraînement (22) sur un bras déplaçable en montée et en descente sur une colonne (26) verticale et qui peut pivoter autour de l'axe (17) de la colonne de guidage (26),
- un arbre (6, 7) de maintien des verres de lunettes, disposé avec son dispositif d'entraînement (23, 24) au-dessus du disque de meulage (2), sur une partie supérieure de la machine et soutenu dans une zone supérieure d'une partie inférieure de la machine,
- une chambre de meulage (12) fixée à la partie supérieure de la machine, enfermant le disque de meulage (2) et l'arbre (6, 7) de maintien des verres de lunettes, rendue étanche à l'égard du liquide de refroidissement projeté par le disque de meulage (2), et disposée dans la zone supérieure, qui soutient l'arbre (6, 7) de maintien des verres de lunettes, de la partie inférieure (1) de la machine, avec un écoulement (13) du liquide de refroidissement guidé vers la zone inférieure de la partie inférieure de la machine, et
- une garniture d'étanchéité (21) déplaçable entre la chambre de meulage (12) et une broche de meulage (18).

3. Machine à meuler le bord de verres de lunettes selon la revendication 1 ou 2, caractérisée en ce que l'étanchéité entre la broche de meulage (18) et la chambre de meulage (12) est constituée d'un soufflet (21).

4. Machine à meuler le bord de verres de lunettes selon la revendication 1 ou 2, caractérisée par une étanchéité entre la chambre de meulage (12) et la partie inférieure (1) de la machine, constituée d'un soufflet (39).

5. Machine à meuler le bord de verres de lunettes selon la revendication 1, 2 ou 3, caractérisée en ce que l'écoulement (13) tubulaire du liquide de refroidissement pénètre dans un bac de collecte (67), en forme d'entonnoir, sur la partie inférieure de la machine, et en ce que le liquide de refroidissement s'écoule du bac de collecte (67) dans un récipient de collecte.

6. Machine à meuler le bord de verres de lunettes selon l'une des revendications 1 à 5, caractérisée par une chambre de meulage (12) essentiellement parallélépipédique avec une paroi avant (61), une paroi arrière (62), deux parois latérales (63) avec des traversées étanches pour l'arbre (6, 7) de maintien des verres de lunettes et la broche de meulage (18), une paroi supérieure (64) avec un couvercle à battant (14), un fond (65) avec l'écoulement (13) du liquide de refroidissement et une arrivée (66) de liquide de refroidissement dans la zone supérieure de la paroi arrière (62) pour arroser à plat, à la manière d'un rideau d'eau, la paroi arrière (62), au moins dans la zone de la largeur du disque de meulage (2).

7. Machine à meuler le bord de verres de lunettes selon la revendication 6, caractérisée par une ouverture (72) qui peut être fermée, pour l'échange du disque de meulage (2) dans la paroi latérale (63) qui fait face à la paroi latérale avec la traversée pour la broche de meulage (1), et dont le diamètre est supérieur au diamètre du disque de meulage (2).

8. Machine à meuler le bord de verres de lunettes à commande numérique, selon l'une des revendications 1 et 3 à 7, comportant :
- une colonne de guidage (26) disposée sur une partie inférieure (1) de la machine,
- un arbre (6, 7) de maintien des verres de lunettes disposé avec son dispositif d'entraînement (23, 24) sur une partie supérieure (3) de la machine qui peut se déplacer dans un mouvement de montée et de descente sur la colonne de guidage (26) et qui peut pivoter autour de l'axe (17) de la colonne de guidage (26), ainsi qu'un disque de meulage (2) disposé avec son dispositif d'entraînement sur la partie inférieure (1) de la machine,
- une colonne de support (27) guidée de manière à pouvoir monter et descendre ainsi qu'à tourner dans la colonne de guidage (26), pour la partie supérieure (3) de la machine,
- un dispositif d'entraînement (30, 31, 32, 35, 36, 37, 38) à commandes numériques, coaxial à la colonne de guidage (26) et agissant sur la colonne de support (27), pour le réglage en hauteur de la colonne de support (27),
- un capteur de course (46, 48, 50) en liaison active avec la colonne de support (27) et la colonne de guidage (26), pour la commande d'un moteur (37) de réglage en hauteur en fonction d'une forme donnée de verres de lunettes, et
- un dispositif d'entraînement (40, 41, 42, 43) pour le déplacement régulier en va-et-vient d'une ébauche de verres de lunettes (9) sur un disque de pré-meulage (70, 71), pour transférer le verre de lunette meulé à la forme dans une rainure à facettes (69) d'un disque de meulage fin (68) et pour meuler une facette en toit sur le pourtour du verre de lunettes meulé à la forme, suivant un parcours prédéterminé, par pivotement commandé de la colonne de support (27) et donc de l'arbre (6, 7) de maintien des verres de lunettes autour de l'axe (17) de la colonne de guidage (26).

9. Machine à meuler le bord de verres de lunettes à commande numérique selon l'une des revendications 2 à 7, comportant :
- une colonne de guidage (26) disposée sur une partie inférieure (1) de la machine,
- un disque de meulage (2), disposé avec son dispositif d'entraînement (22) sur un bras déplaçable en montée et descente sur la colonne de guidage (26) et qui peut pivoter autour de l'axe (17) de la colonne de guidage (26),
- un arbre (6, 7) de maintien des verres de lunettes, disposé avec un dispositif d'entraînement (23, 24) sur une partie supérieure (3) fixe de la machine,
- une colonne de support (27) pour le bras, guidée dans un mouvement de montée et de descente dans la colonne de guidage (26) ainsi qu'en rotation,
- un dispositif d'entraînement (30, 31, 32, 35, 36, 37, 38) à commande numérique, agissant coaxialement dans la colonne de guidage (26), sur la colonne de support (27), pour le réglage en hauteur de la colonne de support (27),
- un capteur de course (46, 48, 50) en liaison active avec la colonne de support (27) et la colonne de guidage (26), pour la commande d'un moteur (37) de réglage en hauteur, suivant une forme à donner au verre de lunettes, et
- un dispositif d'entraînement (40, 41, 42, 43) pour le déplacement régulier en va-et-vient d'un disque de pré-meulage (70, 71) pour le transfert du verre de lunettes meulé à la forme dans une rainure à facettes (69) d'un disque de meulage fin (68) et pour le meulage d'une facette en toit sur le pourtour du verre de lunettes meulé à la forme, suivant un parcours prédéterminé, par pivotement commandé de la colonne de support (27) et donc du disque de meulage (2), autour de l'axe (17) de la colonne de guidage (26).

10. Machine à meuler le bord de verres de lunettes selon la revendication 8 ou 9, caractérisée par une douille sphérique (28) dans la colonne de guidage (26) pour le guidage avec jeu et friction réduits, dans un mouvement de montée et de descente ainsi qu'en pivotement de la colonne de support (27).

11. Machine à meuler le bord de verres de lunettes selon la revendication 8, 9 ou 10, caractérisée par une broche filetée (32) guidée dans la colonne de guidage (26), dans des paliers de roulement radiaux et axiaux (33, 34), et qui peut être mise en rotation par un servomoteur (37), qui agit sur la colonne de support (27), par l'intermédiaire d'une douille filetée (30) disposée solidairement en rotation mais de manière à pouvoir coulisser axialement dans la colonne de guidage (26).

12. Machine à meuler le bord de verres de lunettes selon la revendication 11, caractérisée par un palier de roulements axial (29) entre la douille filetée (30) et la colonne de support (27).

13. Machine à meuler le bord de verres de lunettes selon l'une des revendications 8 à 12, caractérisée en ce que le dispositif d'entraînement pour le pivotement de la colonne de support (27) est constitué d'un servomoteur (40) disposé dans la partie supérieure (3) de la machine et entraînant en rotation une broche filetée (41), ainsi que d'un écrou fileté (42) qui coopère avec la broche filetée (41), et en ce que l'écrou fileté (42) est guidé de manière à pouvoir coulisser perpendiculairement à la colonne de guidage (26), au moyen d'une barre de guidage (43) disposée sur la colonne de guidage (26).

14. Machine à meuler le bord de verres de lunettes selon l'un des revendications 8 à 13, caractérisée par un capteur de course (46, 48, 50) qui est en liaison active avec la douille filetée (30) et la colonne de guidage (26), pour la commande du servomoteur (37), en fonction d'une forme à donner au verre de lunettes.

15. Machine à meuler le bord de verres de lunettes selon la revendication 14, caractérisée en ce que la douille filetée (30) est protégée contre la rotation par une goupille (31) radiale, guidée dans une fente axiale (47), qui sert de support à un codeur (46), et en ce qu'une crémaillère (48), disposée sur la colonne de guidage (26) coopère avec une roue dentée (50) sur le codeur (46), pour relever la course de la douille filetée (30).

16. Machine à meuler le bord de verres de lunettes selon l'une des revendications 1 et 3 à 8, et 10 à 15, comportant :
- une colonne de guidage (26) disposée sur une partie inférieure (1) de la machine et qui peut basculer autour d'un axe horizontal (52), dans la zone de la partie inférieure (1) de la machine,
- une colonne de support (27) guidée dans un mouvement de montée et de descente dans la colonne de guidage (26) ainsi qu'en rotation,
- une partie supérieure (3) de la machine fixée à la colonne de support (27),
- un arbre (6, 7) de maintien des verres de lunettes disposé avec son dispositif d'entraînement (23, 24) dans la partie supérieure (3) de la machine,
- un paquet de disques de meulage (2) disposé sur la partie inférieure (1) de la machine avec son dispositif d'entraînement (22), et
- un contact de commutation (58, 59), disposé dans la zone de l'extrémité supérieure de la colonne de guidage (26), qui s'ouvre ou se ferme lorsqu'un verre de lunettes (9), serré dans l'arbre (6, 7) de maintien des verres de lunettes, repose avec une pression à sélectionner sur l'un des disques de meulage (68, 70, 71) du paquet du disque de meulage (2).

17. Machine à meuler le bord de verres de lunettes selon la revendication 6, caractérisée en ce qu'un palier (51), qui forme l'axe de pivotement horizontal (52) est disposé à distance de l'axe vertical (17) de la colonne de guidage (22) et parallèlement à l'axe (44) du disque de meulage, sur une console (53), à l'extrémité inférieure de la colonne de guidage (22), et diamétralement opposée est disposée une autre console (54) sur la colonne de guidage (22), qui coopère, par un appui (55, 57) élastique, avec la partie inférieure (1) de la machine.

18. Machine à meuler le bord de verres de lunettes selon la revendication 17, caractérisée en ce qu'une vis de réglage (55), qui prend appui par un ressort (57) contre la partie inférieure (1) de la machine, peut être vissée dans la console (54).

19. Machine à meuler le bord de verres de lunettes selon l'une des revendications 16 à 18, caractérisée en ce qu'à l'extrémité supérieure de la colonne de guidage est disposé un poussoir de commutation (58) réglable, dépassant radialement, qui coopère avec un interrupteur (59), réalisé de préférence en tant qu'interrupteur de proximité, disposé radialement par rapport au poussoir de commutation.

20. Machine à meuler le bord de verres de lunettes selon l'une des revendications 1 à 19, caractérisée par un disque de meulage fin (68), avec une rainure à facettes (69), qui est disposé de manière que l'axe (45) de l'arbre (6, 7) de maintien des verres de lunettes se situe, lors du meulage de la facette en toit d'un verre de lunettes (8), dans une position centrale sensiblement parallèle à l'axe (44) du disque de meulage (2), et par des disques de pré-meulage (70, 71) disposés de part et d'autre du disque de meulage (68), dont un est destiné au pré-meulage de verres de silicate et l'autre, au pré-meulage de verres synthétiques.
